# EUROPEAN PATENT SPECIFICATION

(11) **EP 0 678 204 B1**
(45) Date of publication and mention of the grant of the patent: **01.03.2000**
(21) Application number: 94905995.0
(22) Date of filing: 03.01.1994
(51) Int. Cl.: G06F 17/00, G05B 23/02

(54) **MULTIPURPOSE USER INTERFACE**
MEHRZWECKBENUTZERSCHNITTSTELLE
INTERFACE D'UTILISATEUR A USAGES MULTIPLES

(30) Priority: 05.01.1993 US 956
(43) Date of publication of application: 25.10.1995
(73) Proprietor: HONEYWELL INC., Minneapolis Minnesota 55408 (US)
(72) Inventor: METZ, Stephen, V., St. Paul, MN 55104 (US)
(74) Representative: Fox-Male, Nicholas Vincent Humbert
(86) International application number: US9400035
(87) International publication number: WO9416400

(56) References cited:
- EP-A- 0 246 472
- EP-A- 0 354 487
- DE-A- 3 208 136
- US-A- 4 944 613
- R. EDMUNDS 'Encyclopaedia of information Technology', pages 282 - 283, 1987, PRENTICE -HALL, ENGLEWOOD CLIFFS, NY, USA

## Description

### BACKGROUND OF THE INVENTION

This invention is directed toward the field of data display devices, and more specifically to user interfaces for control systems.

There are many control systems installed in or associated with a particular building. For example, temperature controls, lighting controls, security alarms, entertainment controls and outdoor sprinkler systems are all well known systems are which may have electronic controls and they are associated with the building. At one point, such systems each have their own control unit which require a building owner to possibly learn how to control five or six different systems through the different operators.

Eventually, integrated user interfaces became known whereby a number of different control systems could be controlled through one user interface thus allowing a building owner to learn to use only one unit user interface to control a number of systems.

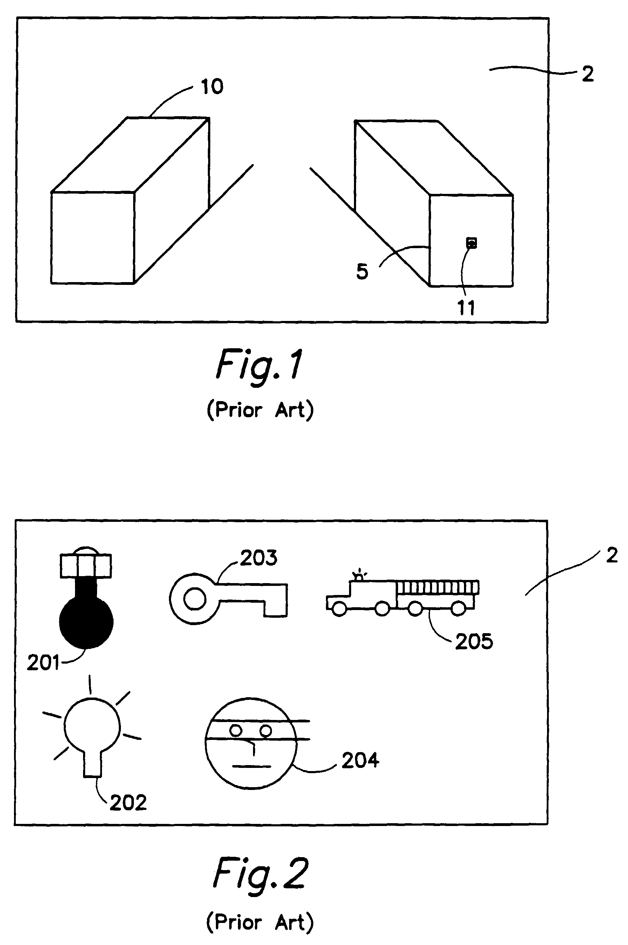

One example of such a user interface is known as Honeywell Graphic Central™ operator interface. The graphic central operator interface is a personal computer with special software which receives signals from a number of different systems and displays information related to the system on the personal computer's display. Generally, a standard screen on such an operator interface would display one or more buildings which could be selected or an information about some area or system in the building as desired. From there, a particular system associated with the building could be selected such as the lighting, HVAC, security, fire or entertainment systems, for display of information. Once a particular system is selected, then a particular site within the building may be selected to determine the status of the system at that point. For example, as shown in Figure 1, first building 5 and second building 10 may be displayed on display 2 of a personal computer (not shown) which connects the building control systems of building 5 and building 10 together in one operator interface. By moving cursor 11 to building 5, either through use of a mouse (not shown) or the cursor control keys (not shown) of a keyboard, an operator could select a building for more display of information. After selecting building 5, a display such as that shown in Figure 2 would appear so that the operator could decide which particular system associated with the building would be presented for display on screen 2. As examples, icons represented of the particular system such as icon 201 representative of the HVAC system, icon 202 representative of the lighting system, icon 203 representative of an access control system, icon 204 representative of an intrusion alarm system and icon 205 representative of a fire alarm system would be displayed. The operator would then move to cursor 11 to a particular icon which represented the desired system, and press some key associated with selection of the icon to present further information on the temperature control system.

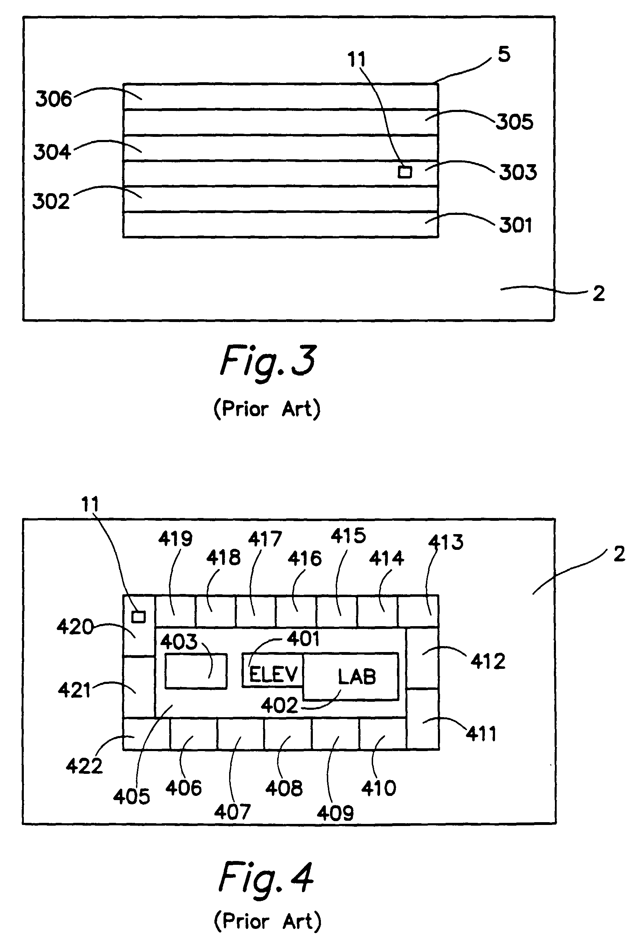

After picking a particular icon, a drawing such as the one shown in Figure 3 would appear on display 2. The drawing would be representative of the floors in building 5. The operator then could move cursor 11 to a particular floor of interest, third floor 303 for selection and select as appropriate for the cursor control means being used.

After a floor has been selected, it is displayed as shown in Figure 4. In Figure 4, floor 303 is shown to have elevator 401, lap 402, hallway 504 and rooms 403, and 406 to 422. Finally, to select temperature information about room 420, cursor 11 is placed over the image of room 420 and selection occurs as normal for the particular cursor control means used.

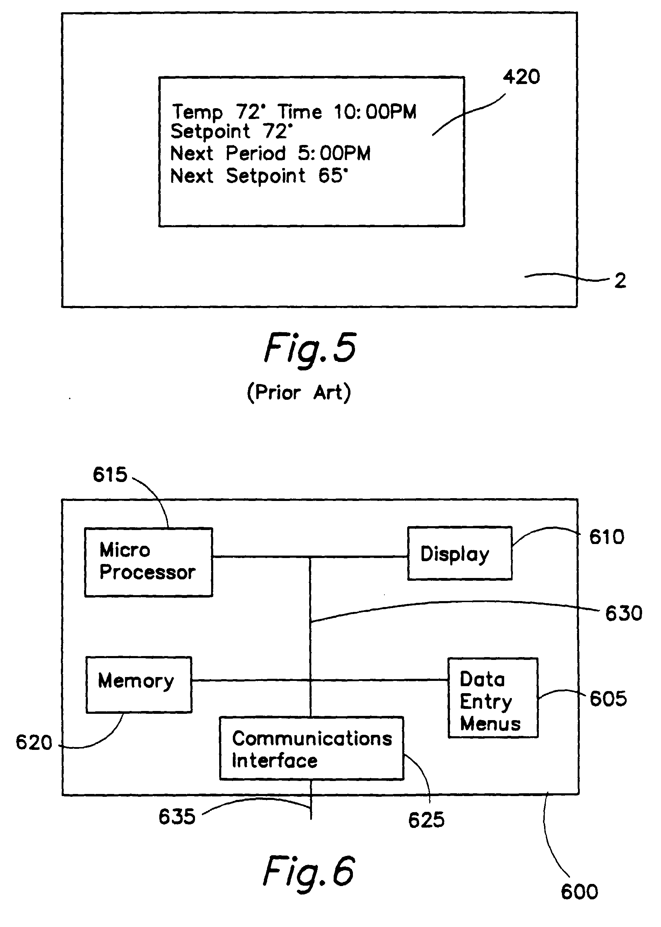

Selection of room 420 results in a display such as the one shown on Figure 5. Finally, the system will display temperature information related to room 420 such as the current temperature set point, the current time, the next time period for a possible temperature control change and a possible next set point. If the user desires to change any of the associated information, it is at this point that the user has the ability to do so. One method for changing the information may be by placing the cursor over the information which is desirable to be changed, entering the selection into the computer, and then modifying the selected parameter. All of the previously described movements through the display are well known in the art.

However, a system such as this requires an expensive and powerful microprocessor and display and a large amount of memory in order to store the graphics associated with the system and all of the data associated with the system. Such systems are more complex and accessibly expensive for use in smaller buildings. Further, a large amount of operator training is required for efficient use of the operator interface and the systems associated therewith.

Lastly, many control actions are required by the prior art operator interfaces prior to display of any information associated with a particular system.

EP-A-0246472 discloses apparatus with a display which identifies the operating unit called up by the actuation of keys (3) and (4)and also indicates the operating state of the addressed device. The apparatus has a number of keys i.e. (3) to (9) each corresponding to a different activity but none of these are reconfigurable in that each activity is fixed and is as indicated on the control unit. The only element which can have a change function is the display (2) which merely indicates the current unit being used and the current state.

### SUMMARY OF THE INVENTION

The present invention provides a method as defined by Claim 1 hereinafter.

The present invention also provides apparatus as defined by Claim 9 hereinafter.

In this way, the present invention may provide a low cost easy to use multipurpose operator interface. The operator interface can display at a top level a display screen which provides summary information on one or more of the systems connected thereto. Through the use of a simplified keyboard and software reconfigurable keys, the operator may quickly move through and receive summary information on all systems associated with the user interface.

The present invention may also provide any one or more of the features defined in the dependent Claims 2 to 8 and 10 to 17 of this patent specification.

### BRIEF DESCRIPTION OF THE DRAWINGS

Figures 1-5 show displays from a prior art operator interface.
Figure 6 is a block diagram of the user interface of the present invention.
Figure 7A is a diagram of the hierarchical organization of the user interface. Figure 7B is a flow chart of the method used in operation of the inventive operator interface. Figures 7C and D show representations of the menu hierarchy of one preferred embodiment.
Figure 8 shows the interconnection of the operator interface with other applications connected to the operator interface.
Figure 9 shows a building in which the operator interface and a temperature control system with zone control resides.
Figures 10A through 10N show representative display screens of the inventive user interface.

### DETAILED DESCRIPTION OF THE PREFERRED EMBODIMENT

Referring now to Figure 1, thereshown is a block diagram of the inventive user interface 600. Standard configurations of information displays are well known in the art.

Here, the user interface 600 includes data entry means 605, display 610, microprocessor 615, memory 620, communications interface 625 and communications bus 630. Note that there are many possible configurations for communications connection of the parts: communications bus 630 is merely one possibility. Other arrangements of the parts within the scope of the invention, are contemplated.

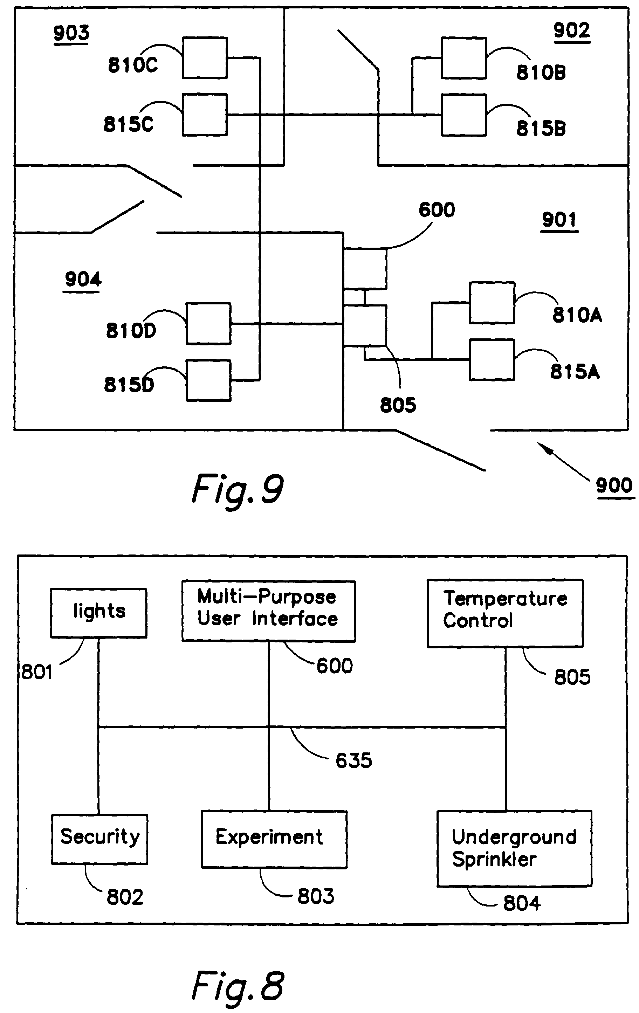

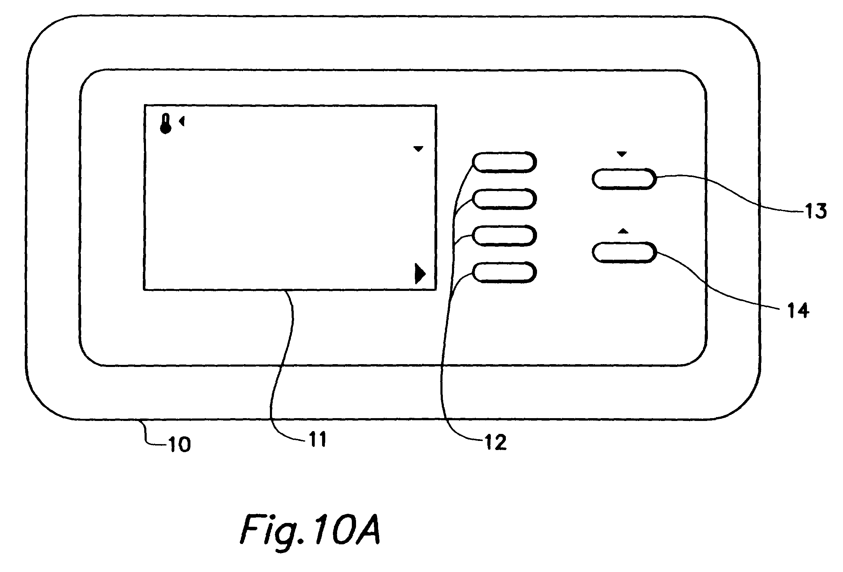

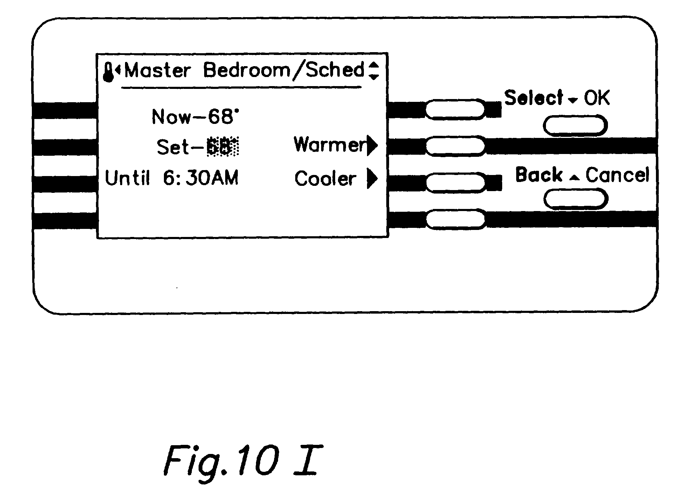

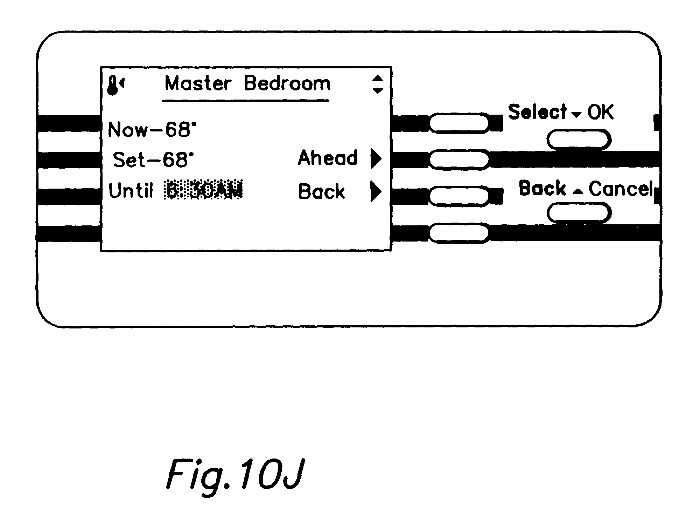

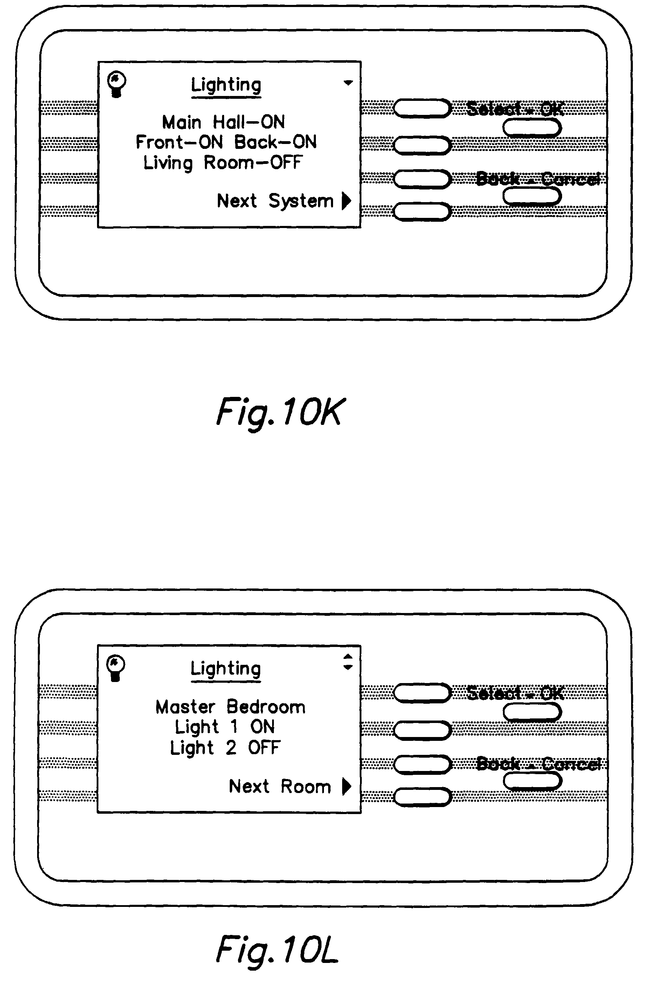

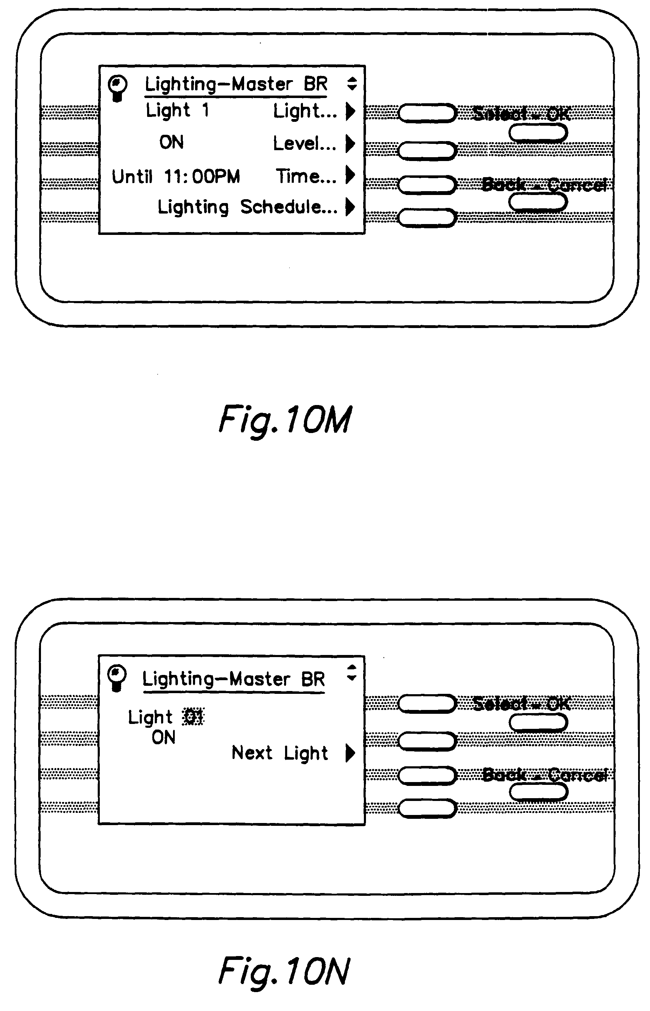

The display 610, which may be such as a liquid crystal display (LCD) or a cathode ray tube (CRT) is used to display information related to the user interface 600 or to systems connected to the user interface, such as those discussed in connection with Figure 8. The information to be displayed is controlled by the microprocessor 615 which in turn operates on instructions and data from memory 620. Memory 620 may include both random access memory and read only memory. Sample displays are shown in Figures 10A through 10L.

Microprocessor 615 has general supervisor control over communications and actions within the user interface. Microprocessor 615 receives instructions and data from memory 620, user input from data entry means 605 and system data via communications interface 625 and controls what appears on display 610.

Communications interface 625 receives signals transmitted on bus 635, and translates those signals into signals which can be understood by the parts connected to bus 630. In addition, the communication interface 625 translates signals coming in from bus 630 to signals which can be used by systems connected to bus 635 (see Figure 8).

Data entry means 605 may include one or more entry means such as a plural key keyboard. The individual entry means are used by the user to select desired actions for, or to input information into, the user interface. In a preferred embodiment, at least one key is physically positioned in close proximity to the display and can be used as a software reconfigurable key (hereinafter "softkey") and another key has a predetermined, perpetual function. The uses of the softkey and other entry means will be further described in connection with Figures 10A through 10L.

Turning now to Figure 8, thereshown is a block diagram of a system which might incorporate the user interface 600. The user interface 600 is connected to light system 801, security system 802, entertainment system 803, underground sprinkler system 804, and temperature control system 805 via bus 635. Each of these systems may have a controller for control of individual subsystems of the overall system such as for control of individual lights, or zone temperature controls as shown in Figure 9. The user interface is used to display information from, and to input desired control actions into, the one or more of the systems connected to the user interface. Communications among the systems and operator interface connected to bus 635 may be structured using the communications protocol disclosed in United States Patent Application serial number 07/811,772 by David J. Myers and assigned to the assignee of the present application. The foregoing application is incorporated by reference herein.

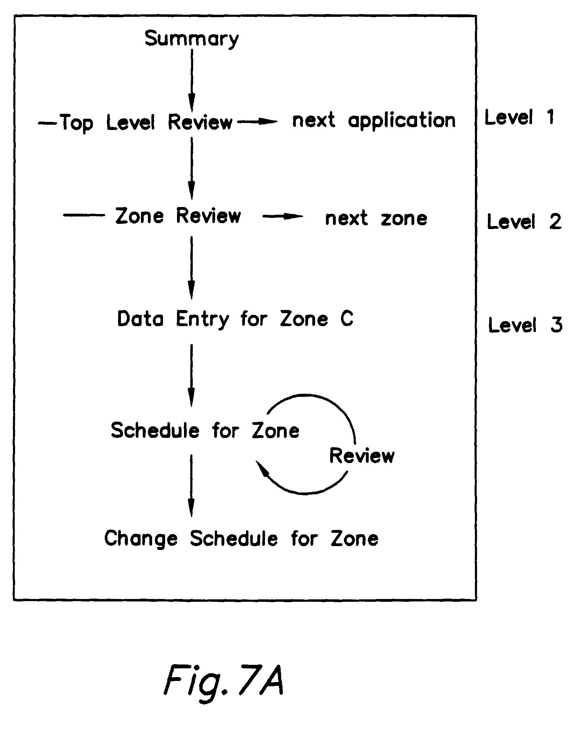

Referring now to Figure 7A, thereshown is a diagram of the hierarchical organization for the inventive user interface. At Level-1, by actuation of a softkey will move the user interface from one Level-1 display to another while the actuation of the fixed key will cause the user interface to move from Level-1 to Level-2. Thus, the operator may move from one application to another by actuation of a softkey while actuation of the fixed key will provide more in depth information about the application then being displayed.

Once the user interface is at Level-2, the operator is then again presented with two choices. Actuation of the softkey will move the display within Level-2 while depression of the fixed key will move the user interface to Level-3. Here, actuation of the softkey allows for movement within zones of the application being viewed while actuation of the fixed key will move the user interface on to a data entry level of the user interface.

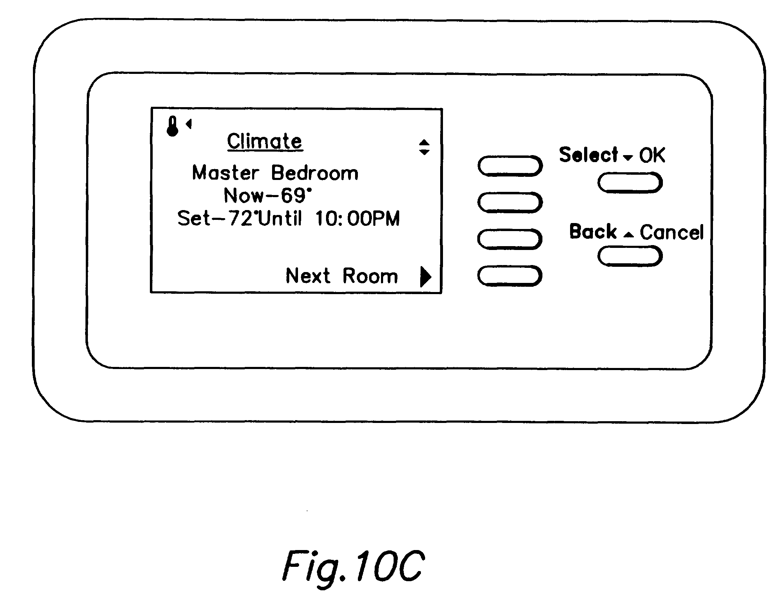

At Level-3, the operator is presented with plural softkey options and the usual fixed key options. Selection of a softkey will all the display and modification of specific information associated with the display at Level-3. A more detailed description of this operation will be described in the example provided by Figure 10C.

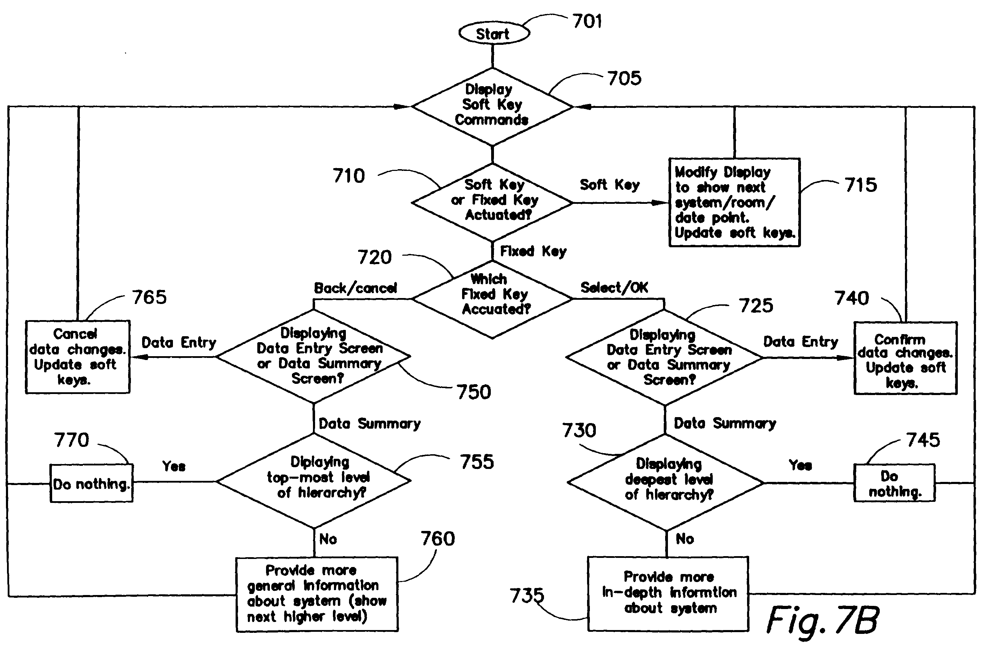

Referring now to Figure 7B is a flow chart of the inventive method. After starting at block 701, the first step is to display a first softkey display on the display means at block 705. The next step requires determining whether a softkey or a fixed key has been actuated at block 710. If a softkey has been actuated, the next step is to modify the display to show the next system/room /data point and update the soft key(s). The method then returns to block 705.

If a fixed key is actuated at block 710, the next step at block 720 requires a determination of which fixed key has been actuated. Here, for example, there are two fixed keys, labeled "Back/Cancel" or "Select/O.K." If the Select/O.K. fixed key has been actuated, the method moves to block 725 at which point the method determines whether the Operator Interface is displaying a Data Entry Screen or a Data Summary Screen. If the Operator Interface is displaying a Data Entry Screen, the method moves to block 740 where the method confirms data changes and updates the softkeys and then returns to block 710. If the Operator Interface is displaying a Data Summary Screen, the method moves on to block 730.

At block 730 the method determines whether the deepest level of the hierarchy is being displayed. If yes, the method does nothing and returns to block 705. If not, the method provides more in-depth information about the system displayed. The method then returns to block 705.

If the Back/Cancel key has been actuated at block 720, the method next determines whether the Operator Interface is displaying a Data Entry Screen or a Data Summary Screen at block 750. If the Operator Interface is displaying a Data Entry Screen, the method moves on to block 765 where data changes are canceled and the soft keys are updated. The method then returns to block 705.

If a Data Summary Screen is being displayed, the method determines at block 755 whether the Operator Interface is at the top-most level of the hierarchy. If it is, the method does nothing at block 770 and returns to block 705. If not, the Operator Interface will move to a more general screen at block 760 and will return to block 705.

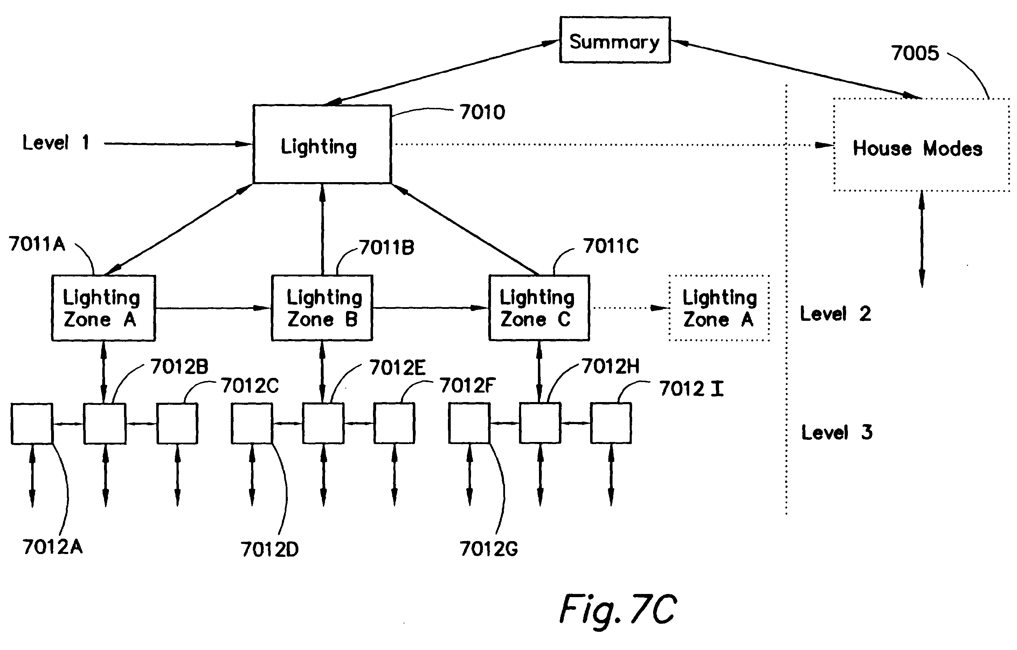

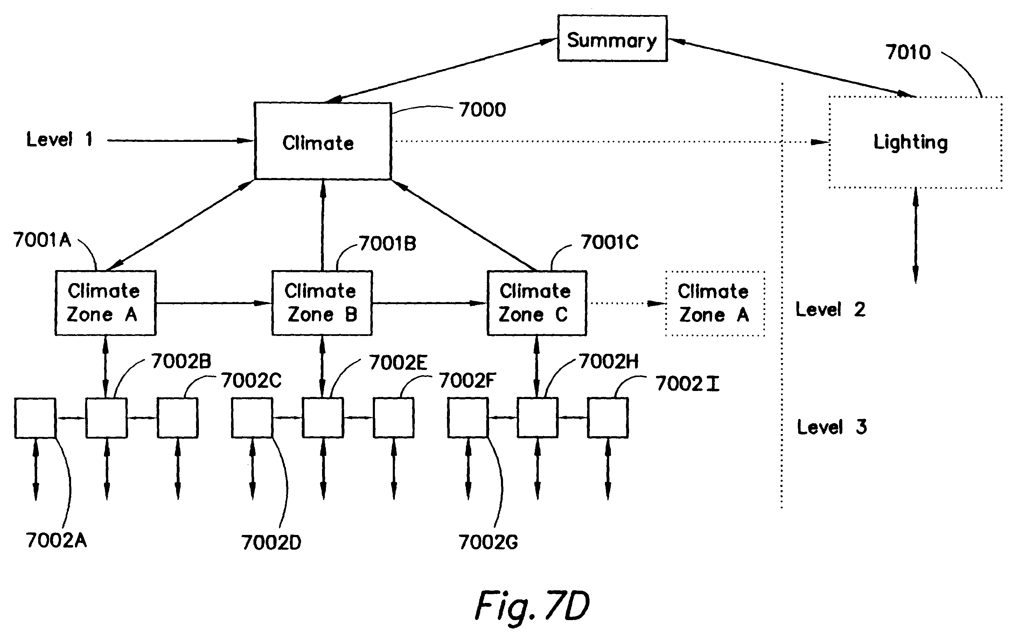

Figures 7C and D show preferred embodiments of menu structures in a hierarchy incorporating the principles of Figures 7A and B. In Figure 7C, Climate menu 7000 is shown connected to Lighting menu 7010 and to Zone menus 7001A-C. In turn, Zone Menu 7001A is connected to Data Entry menus 7002A-C with the other Zone menus having similar Data Entry Menus (7002D-I).

Referring now to Figure 9, thereshown is a sample temperature zoning system which may be used with the inventive operator interface 600. Building 900 is divided into plural rooms 901 to 904. Temperature sensors 810A through 810D are located, one to a room, through building 900 to measure the temperature of each room. The temperature sensors are connected to temperature controller 805. Temperature controller 805, which may be a Honeywell MicroCel™ controller, contains software and hardware which monitors temperature inputs from the temperature sensors and will control temperature control means 810A through 810D so that actual space temperature is near to desired setpoints. Temperature control means may be variable air volume boxes which are well known in the art. Setpoint information may be entered into the temperature controller 805 through the operator interface 600 as described herein.

Referring now to Figures 10A through 10N thereshown are many examples of displays shown on the display means as a user moves through the user interface, and the face of the user interface unit. It should be noted that while the following description is with reference to a climate control system and associated displays, any automatic control system having a similar hierarchical structure could be displayed using the inventive user interface. In Figure 10A, a top level display is shown for the climate control system having keys 12 and 14 and a display 11. The display may show summary information about the climate control system such as inside temperature, outside temperature and the temperature in one preselected room. The display also includes a portion which identifies a key and identifies what will occur if the key is actuated (softkey). Two fixed keys, Select/OK and Back/Cancel are also shown. To view a next system, the Next System softkey would be actuated and the Lighting System display shown in Figure 10I would be displayed. Repeated actuation of the Next System softkey would lead to further displays (not shown) of systems connected to the user interface until displays associated with all of the systems have been shown. At that point, a further actuation of the softkey would produce the display of Figure 10A once again.

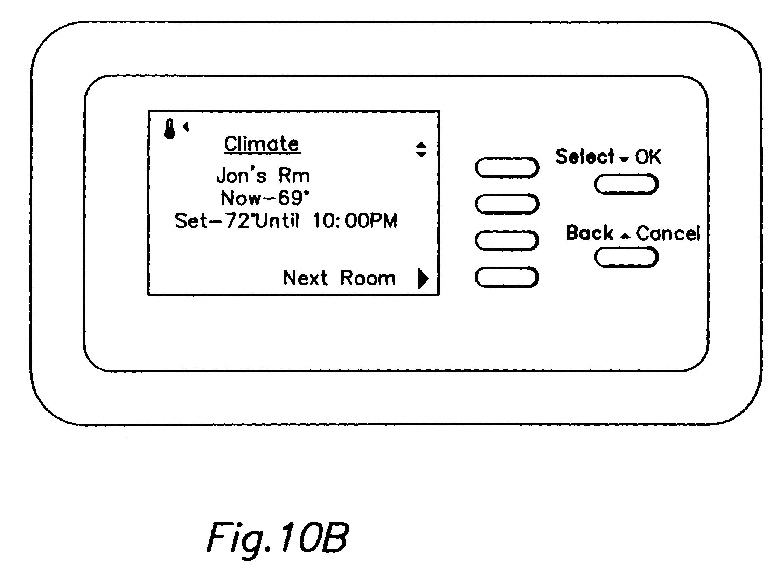

If the Select key is actuated in Figure 10A, the user interface would produce the display shown in Figure 10B. The display of Figure 10B shows more in depth information about the climate system. Here, the display shows relevant information for "Jon's Rm." Again, the operator is presented with plural control choices. The softkey is configured to provide information on a "Next Room" instead of the "Next System" displayed in the display of Figure 10A. The fixed key options will be discussed in reference to Figure 10C.

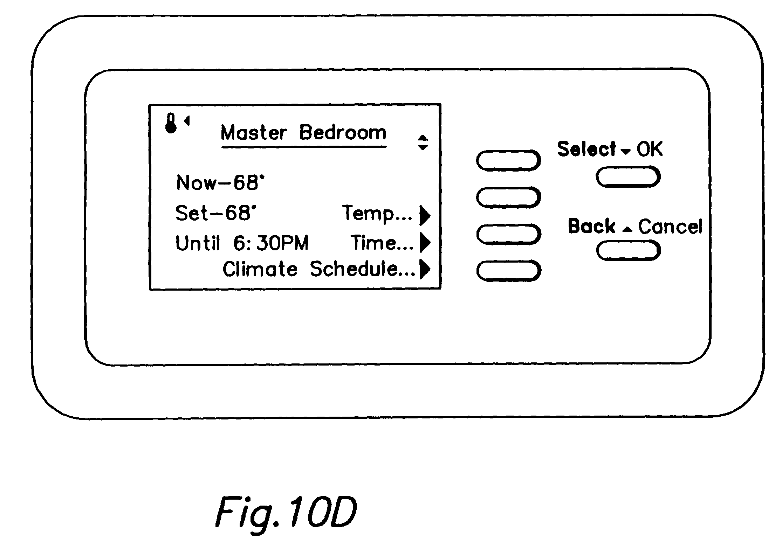

Actuation of the softkey in Figure 10B causes the user interface to produce the display of Figure 10C which is for the "Master Bedroom." Note that the display for the Master Bedroom includes the same types of information as the display for Jon's Room, including the same softkey description. Repeated actuation of the Next Room softkey would cause the user interface to scroll through all rooms which are connected to the climate control system. Actuation of the Back/Cancel key would cause the user interface to return to the display of Figure 10B in this case. Actuation of the Select/OK key leads to the next level of display as shown in Figure 10D.

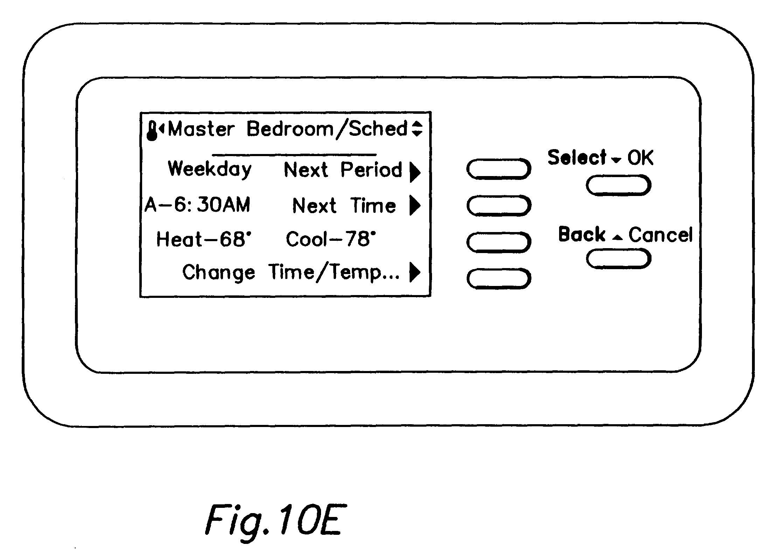

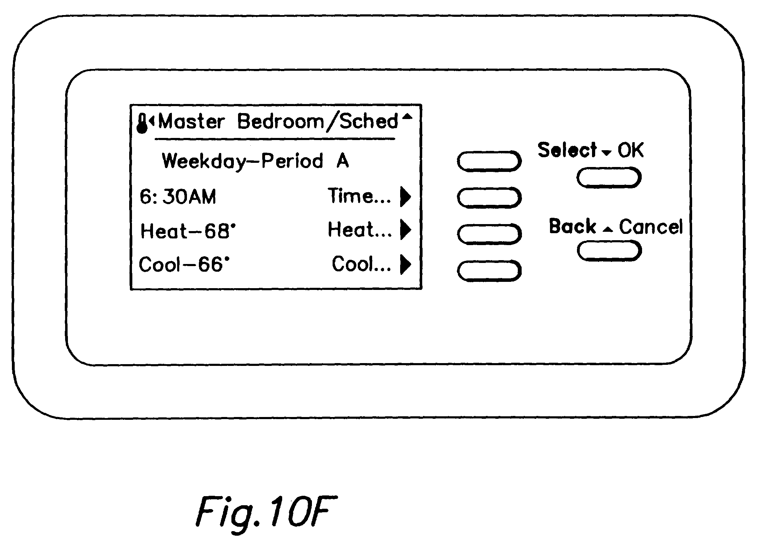

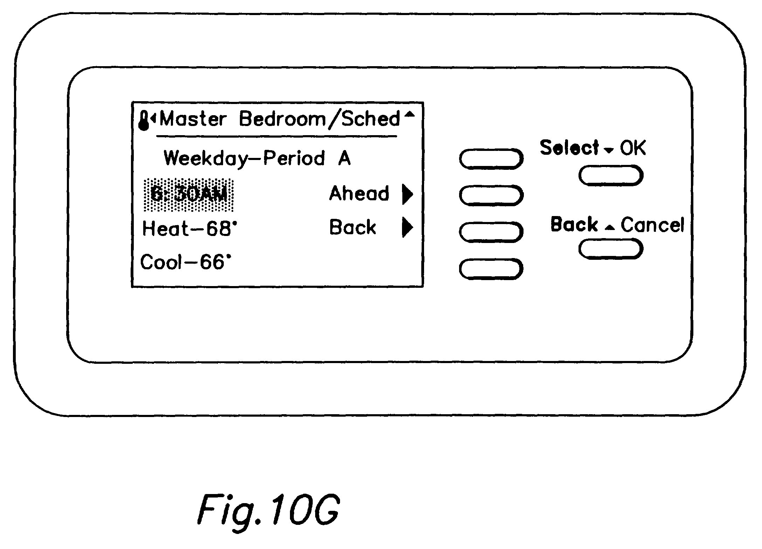

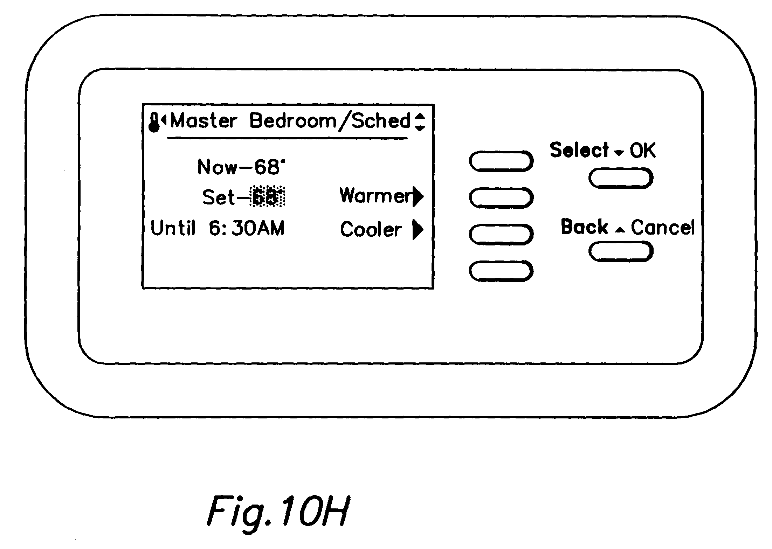

In Figure 10D, a new display is shown which allows the operator to display more information regarding the selected room. Here, three softkeys are configured to provide the operator with more control options. The three softkeys in this example are Climate Schedule, Time and Temp. The Temp and Time softkeys allow the operator to temporarily modify the duration of the current heat/cool cycle and temperature parameters associated with this particular room and actuation of these keys leads to the displays of Figures 10. Actuation of the Climate Schedule softkey causes the user interface to produce the display shown in Figure 10E.

In Figure 10E, the softkeys are set up so that the operator may review the schedule information for the selected room. Acutuation of the Next Time key changes the display of the time period associated with a particular day. Actuation of the Change Time/Temp softkey causes the operator interface to display the display shown in Figure 10F.

In Figure 10F, the operator is allowed to modify either the time a period begins or the setpoints for heating and cooling for the period. This selection occurs through actuation of the appropriate softkey. Figure 10G shows the display after the Time softkey of Figure 10F has been actuated.

In Figure 10G, the display provides two softkeys for modification of the time at which a period begins. The time for the start of a period may be modified by actuation of the Ahead or Back softkeys.

Figure 10H shows the display after either the Heat softkey of Figure 10F has been actuated. By actuation of the Warmer and Cooler softkeys, the setpoint temperature can be modified as desired.

As indicated with reference to Figure 10A, actuation of the Next System softkey will cause the operator interface to display the display shown in Figure 10K. Figures 10K through 10N show movement through the displays associated with a sample Lighting System (not shown) to show how displays for another system may be arranged. Actuation of the Select/OK key causes the operator interface to display the display shown in Figure 10L, while actuation of the Next System Softkey might lead to display of information about yet another system (not shown) or lead back to the Figure 10A display if no other systems are connected to the operator interface. In Figure 10L, more specific information about the lighting system is displayed. Actuation of the Select/OK key at this point causes the operator interface to display the display shown in Figure 10M. In Figure 10M, the operator is presented with the necessary softkeys to modify lighting system control parameters. Actuation of the Light softkey causes the operator interface to move to the display shown in Figure 10N.

It should be noted that the foregoing description of movement through the displays of the inventive operator interface all match the description of the operation of the operator interface found in Figures 7A and B.

It should also be noted that as an additional aid to the operator, icons indicating location within the operator interface's hierarchy and selected system are displayed. Such icons are not an essential element of the basic invention but are an enhancements for the benefit of the operator. The icons can be shapes which uniquely identify the system being displayed, such as a light bulb for the lighting system (see Figures 10J through 10L) or a thermostat for the Climate system (see Figures 10A through 10I).

The arrows shown in Figures 10A through 10M indicate the direction in which the menu structure may be penetrated. As an example, only the down arrow is shown in Figures 10A and 10J indicating that the operator interface is at the top level of the hierarchy. Figure 10 I depicts only an up arrow indicating that the operator interface is at the bottom level of the hierarchy in that Figure. The arrow displays may be created by setting a flag in the graphics associated with the top and bottom levels of the hierarchy to display the appropriate arrows, and a software instruction causing both arrows to be displayed when neither flag is present. Such a technique is well known in the art.

The foregoing has been a description of a novel and non-obvious apparatus and method for displaying and modifying parameters associated with one or more systems. The inventor does not intend that the foregoing description be limiting but instead defines his invention through the claims appended hereto.

## Claims

1. A method for displaying information and modifying parameters associated with a system in an operator interface unit which includes a display means and data entry means, the data entry means including keys, the operator interface having a hierarchy of displays for displaying on the display means, the hierarchy including levels of displays, each level having one or more displays, the method characterised by the steps of:
displaying system parameter information associated with a display in a current level;
displaying a softkey command on the display means, a softkey being a software reconfigurable key with identification of what will occur if the key is actuated;
determining whether a softkey or a fixed key has been actuated;
displaying, within a next level, a display if said fixed key has been actuated; and
displaying within a current level, a next display if said softkey has been actuated.

2. A method according to Claim 1, determining whether a top or bottom level has been reached in the hierarchy upon actuation of said fixed key and if the bottom level has been reached, doing nothing upon further actuation of the fixed key, and if not, operating normally.

3. A method according to Claim 1 or 2 characterised by displaying a system parameter modification instruction in association with a softkey when a current penetration level value has a predetermined relationship to a row penetration limit value.

4. A method according to any preceding Claim characterised by:-
determining whether the softkey associated with a system parameter modification instruction has been actuated;
modifying the system parameter if the softkey associated with said system parameter modification instruction has been actuated.

5. A method according to any preceding Claim characterised by:-
determining whether the fixed key has been actuated;
entering the displayed system parameter into the system if the fixed key has been actuated.

6. A method according to any preceding Claim characterised in that the operator interface has first and second fixed keys, the first fixed key serving the first function of incrementing the level of a display to be displayed and the second function of entering system parameters, the second fixed key serving the first function of decrementing the level of a display to be displayed and the second function of canceling changes to system parameters, comprising the further steps of:
determining whether the first or second fixed key has been actuated;
performing the first function for the fixed key actuated if said bottom level has not been reached; and
performing the second function for the fixed key actuated otherwise.

7. A method according to any preceding Claim, characterised by displaying an icon on the display means which identifies the system for which information is being displayed.

8. A method according to any preceding Claim characterised by:-
displaying a symbol indicating that modification of the display means to show displays in a next level is possible whenever a current display is not from said bottom level; and
displaying a symbol indicating that modification of the display means to display screens in a previous level is possible if the current display is not from the top level.

9. Apparatus for displaying information and modifying parameters associated with a system, comprising a communications bus (635), a controller (600) connected to the communications bus for controlling operations of the apparatus, a display means (10, 11) connected to said communications bus for displaying displays which contain information associated with the system, memory connected to said communications bus, said memory storing instructions for said controller and format and data information for a menu of displays for displaying on the display means, the menu including plural levels of displays, said displays providing information about the system, the apparatus characterised by:-
data entry means (12, 13, 14) connected to the bus, said data entry means including a fixed key (13, 14) and a softkey (12), a softkey being a software reconfigurable key with identification of what will occur if the key is actuated, actuation of said fixed key causing said display means to show a display from a next level, actuation of said sofkey causing said display means to show a next display from a current level; and
a communications interface (635) for connection of said communications bus to the system.

10. Apparatus according to Claim 9, characterised in that said memory stores a bottom level (7012A-I) and a top level (7010) and said apparatus farther comprises a tracking means for tracking a current penetration level within the menu and comparison means for comparing said level penetration limit to said top and bottom levels as required.

11. Apparatus according to Claim 10, characterised in that said display means displays a system parameter modification instruction in association with a softkey when said current penetration level value has a predetermined relationship to said row penetration limit value.

12. Apparatus according to Claim 11 characterised in that said controller modifies the system parameter being displayed if the softkey associated with said system parameter modification instruction has been actuated.

13. Apparatus according to Claim 12 characterised in that said controller enters the displayed system parameter into the system if the fixed key has been actuated.

14. Apparatus according to any of Claims 9 to 13 characrerised in that the data entry means has first and second fixed keys, the first fixed key serving the first function of incrementing the level of a display to be displayed and the second function of entering system parameters, the second fixed key serving the first function of decrementing the level of a display to be displayed and the second function of canceling changes to system parameters.

15. Apparatus according to Claim 14 characterised in that said controller causes said first and second fixed keys to perform their respective first functions for the fixed key actuated if said level penetration limit does not have said predetermined relationship to said bottom level; and
said controller causes said first and second fixed keys to perform their respective second functions for the fixed key actuated, otherwise.

16. Apparatus according to any of Claims 9 to 15 characterised in that said memory stores an icon for display on said display means, said icon being symbolic of the system.

17. Apparatus according to any of Claims 9 to 16 characterised in that:-
said controller instructs said display means to display a symbol indicating that modification of the display means to display screens in a next level from a present display is possible if said current level is not the bottom level; and
said controller instructs said display means to display a symbol indicating that modification of the display means to show displays in a previous level from a present display is possible if said current row penetration level is not the top level.

## Patentansprüche

1. Verfahren zur Informations-Darstellung und zur Modifizierung von Parametern, die einem System in einer Bedienungs-Schnittstelleneinheit zugeordnet sind, welche eine Anzeigeeinrichtung und eine Daten-Eingabeeinrichtung umfaßt, wobei die Daten-Eingabeeinrichtung Tasten umfaßt, die Bedienungs-Schnittstelle eine Hierarchie von Anzeigen zur Darstellung aufder Anzeigeeinrichtung umfaßt, die Hierarchieanzeigepegel umfaßt, jeder Pegel eine oder mehrere Anzeigen besitzt und wobei das Verfahren **gekennzeichnet ist durch** die Schritte:
Darstellung von Systemparameter-Information, die einer Anzeige auf einem laufenden Pegel zugeordnet ist;
Darstellung einer Softkey-Anweisung auf der Anzeigeeinrichtung, wobei ein Softkey eine durch Software rekonfigurierbare Taste mit einer Identifizierung ist, was geschehen wird, wenn die Taste betätigt wird;
Feststellung, ob ein Softkey oder eine festgelegte Taste betätigt worden ist;
Darstellung einer Anzeige innerhalb eines nächsten Pegels, wenn die festgelegte Taste betätigt worden ist; und
Darstellung einer nächsten Anzeige innerhalb eines laufenden Pegels, wenn der Softkey betätigt worden ist.

2. Verfahren nach Anspruch 1, **gekennzeichnet durch** die Feststellung, ob ein oberer oder unterer Pegel in der Hierarchie bei der Betätigung der festgelegten Taste erreicht worden ist und wenn der untere Pegel erreicht worden ist, nichts tun bei weiterer Betätigung der festgelegten Taste und wenn nicht, normaler Betrieb.

3. Verfahren nach Anspruch 1 oder 2, **gekennzeichnet durch** die Darstellung eines Systemparameter-Modifikationsbefehles zusammen mit einem Softkey, wenn ein laufender Penetrations-Pegelwert eine vorbestimmte Beziehung zu einem Zeilen-Penetrations-Grenzwert besitzt.

4. Verfahren nach irgendeinem vorhergehenden Anspruch, **gekennzeichnet durch**:
Feststellung, ob der Softkey, der einem Systemparameter-Modifikationsbefehl zugeordnet ist, betätigt worden ist;
Modifizierung des System-Parameters, wenn der Softkey, der dem Systemparameter-Modifikationsbefehl zugeordnet ist, betätigt worden ist.

5. Verfahren nach irgendeinem vorhergehenden Anspruch, **gekennzeichnet durch**:
Feststellung, ob die festgelegte Taste betätigt worden ist;
Eingabe des dargestellten Systemparameters in das System, wenn die festgelegte Taste betätigt worden ist.

6. Verfahren nach irgendeinem vorhergehenden Anspruch, **dadurch gekennzeichnet**, daß die Bedienungs-Schnittstelle erste und zweite festgelegte Tasten besitzt, wobei die erste festgelegte Taste der ersten Funktion der Erhöhung des Pegels einer darzustellenden Anzeige und der zweiten Funktion der Eingabe von Systemparametern dient, wobei die zweite festgelegte Taste der ersten Funktion der Herabsetzung des Pegels einer darzustellenden Anzeige und der zweiten Funktion der Streichung von Änderungen der Systemparameter dient, und die weiteren Schritte umfaßt:
Feststellung, ob die erste oder zweite festgelegte Taste betätigt worden ist;
Ausführung der ersten Funktion bei betätigter festgelegter Taste, wenn der untere Pegel nicht erreicht worden ist; und
Ausführung der zweiten Funktion bei betätigter festgelegter Taste im anderen Fall.

7. Verfahren nach irgendeinem vorhergehenden Anspruch, **gekennzeichnet durch** die Darstellung eines Icons auf der Anzeigeeinrichtung, welches das System identifiziert, für welches Information dargestellt wird.

8. Verfahren nach irgendeinem vorhergehenden Anspruch, **gekennzeichnet durch**:
Darstellung eines Symbols, das diese Modifikation der Anzeigeeinrichtung anzeigt, um zu zeigen, daß Anzeigen auf einem nächsten Pegel immer dann möglich sind, wenn eine laufende Anzeige nicht vom unteren Pegel erfolgt; und
Darstellung eines Symboles, das diese Modifikation der Anzeigeeinrichtung anzeigt, um darzustellen, daß Anzeigen auf einem vorangegangenen Pegel möglich sind, wenn die laufende Anzeige nicht von dem oberen Pegel erfolgt.

9. Vorrichtung zur Informationsdarstellung und zur Modifizierung von Parametern, die einem System zugeordnet sind, umfassend einen Dialogbus (635), eine Steuerung (600), die an den Dialogbus angeschlossen ist, um den Betrieb der Vorrichtung zu steuern, eine Anzeigeeinrichtung (10, 11), die an den Dialogbus angeschlossen ist, um Anzeigen darzustellen, welche dem System zugeordnete Information enthalten, ein Speicher, der an den Dialogbus angeschlossen ist, wobei der Speicher Befehle für die Steuerung und Format- und Dateninformation für ein Menü von Anzeigen zur Darstellung auf der Anzeigeeinrichtung speichert, wobei das Menü mehrere Pegel von Anzeigen umfaßt und die Anzeigen Information über das System vorgeben, wobei die Vorrichtung **gekennzeichnet ist durch**:
eine Daten-Eingabeeinrichtung (12, 13, 14), die an den Bus angeschlossen ist, wobei die Daten-Eingabeeinrichtung eine festgelegte Taste (13, 14) und einen Softkey (12) umfaßt, wobei ein Softkey eine durch Software rekonfigurierbare Taste mit einer Identifizierung ist, was geschehen wird, wenn die Taste betätigtwird, die Betätigung der festgelegten Taste die Anzeigeeinrichtung veranlaßt, eine Darstellung auf einem nächsten Pegel zu zeigen, die Betätigung des Softkeys die Anzeigeeinrichtung veranlaßt, eine nächste Darstellung gegenüber einem laufenden Pegel zu zeigen; und
eine Dialog-Schnittstelle (635) für die Verbindung des Dialogbusses mit dem System.

10. Vorrichtung nach Anspruch 9, **dadurch gekennzeichnet**, daß der Speicher einen unteren Pegel (7012A-I) und einen oberen Pegel (7010) speichert und daß die Vorrichtung ferner eine Verfolgungseinrichtung umfaßt, um einen laufenden Penetrationspegel innerhalb des Menüs zu verfolgen und eine Vergleichseinrichtung umfaßt, um die Pegel-Penetrationsgrenze mit den oberen und unteren Pegeln in der geforderten Weise zu vergleichen.

11. Vorrichtung nach Anspruch 10, **dadurch gekennzeichnet**, daß die Anzeigeeinrichtung einen Systemparameter-Modifikationsbefehl zusammen mit einem Softkey darstellt, wenn der laufende Penetrations-Pegelwert eine vorbestimmte Beziehung zu dem Zeilen-Penetrations-Grenzwert besitzt.

12. Vorrichtung nach Anspruch 11, **dadurch gekennzeichnet**, daß die Steuerung den dargestellten Systemparameter modifiziert, wenn der dem Systemparameter-Modifikationsbefehl zugeordnete Softkey betätigt worden ist.

13. Vorrichtung nach Anspruch 12, **dadurch gekennzeichnet**, daß die Steuerung den dargestellten Systemparameter in das System eingibt, wenn die festgelegte Taste betätigt worden ist.

14. Vorrichtung nach irgendeinem der Ansprüche 9 bis 13, **dadurch gekennzeichnet**, daß die Daten-Eingabeeinrichtung erste und zweite festgelegte Tasten besitzt, wobei die erste festgelegte Taste der ersten Funktion der Erhöhung des Pegels einer darzustellenden Anzeige und der zweiten Funktion der Eingabe von Systemparametern dient und die zweite festgelegte Taste der ersten Funktion der Verminderung des Pegels einer darzustellenden Anzeige und der zweiten Funktion der Aufhebung von Änderungen der Systemparameter dient

15. Vorrichtung nach Anspruch 14, **dadurch gekennzeichnet**, daß die Steuerung die ersten und zweiten festgelegten Tasten veranlaßt, ihre entsprechenden ersten Funktionen für die betätigte festgelegte Taste auszuführen, wenn die Pegel-Penetrationsgrenze nicht die vorbestimmte Beziehung zu dem unteren Pegel besitzt; und
die Steuerung die ersten und zweiten festgelegten Tasten veranlaßt, ihre entsprechenden zweiten Funktionen für die betätigte festgelegte Taste im anderen Fall auszuführen.

16. Vorrichtung nach irgendeinem der Ansprüche 9 bis 15, **dadurch gekennzeichnet**, daß der Speicher ein Icon für die Darstellung auf der Anzeigeeinrichtung speichert, wobei das Icon symbolisch für das System ist.

17. Vorrichtung nach irgendeinem der Ansprüche 9 bis 16, **dadurch gekennzeichnet**:
daß die Steuerung der Anzeigeeinrichtung befiehlt, ein Symbol darzustellen, das die Modifizierung der Anzeigeeinrichtung anzeigt, um Bildschirme auf einem nächsten Pegel gegenüber einer vorliegenden Darstellung darzustellen, wenn der laufende Pegel nicht deruntere Pegel ist; und
daß die Steuerung der Anzeigeeinrichtung befiehlt, ein Symbol darzustellen, das die Modifikation der Anzeigeeinrichtung anzeigt, um Darstellungen auf einem vorangegangenen Pegel gegenüber einer vorliegenden Darstellung zu zeigen, wenn der laufende Zeilen-Penetrationspegel nicht der obere Pegel ist.

## Revendications

1. Procédé d'affichage d'informations et de modification de paramètres associés à un système dans une unité d'interface d'opérateur qui comprend un moyen d'affichage et un moyen d'entrée de données, le moyen d'entrée de données comportant des touches, l'interface d'opérateur présentant une hiérarchie d'écrans d'affichage destinés à être d'affichés sur le moyen d'affichage, la hiérarchie comprenant des niveaux d'écrans d'affichage, chaque niveau comprenant un ou plusieurs écrans d'affichage, le procédé étant caractérisé par les étapes de:
affichage d'informations de paramètres de système associées à un écran d'affichage d'un niveau courant ;
affichage d'une instruction de touche logicielle sur le moyen d'affichage, une touche logicielle étant une touche pouvant être reconfigurée de manière logicielle avec identification de ce qui se produit si la touche est actionnée ;
détermination du fait qu'une touche logicielle ou une touche fixe a été activée ;
affichage, à un niveau suivant, d'un écran d'affichage si ladite touche fixe a été activée ; et
affichage, à un niveau courant, d'un écran d'affichage suivant si ladite touche logicielle a été activée.

2. Procédé selon la revendication 1, comprenant l'étape consistant à déterminer qu'un niveau supérieur ou inférieur a été atteint dans la hiérarchie lors de l'activation de ladite touche fixe, et, si le niveau inférieur a été atteint rester inactif lors d'une activation consécutive de la touche fixe, et, sinon, fonctionner normalement.

3. Procédé selon la revendication 1 ou 2, caractérisé par l'affichage d'une instruction de modification de paramètre de système en association avec une touche logicielle lorsqu'une valeur de niveau de pénétration courante présente une relation prédéterminée avec une valeur limite de pénétration de rangée.

4. Procédé selon l'une quelconque des revendications précédentes, caractérisé par:
la détermination du fait que la touche logicielle associée à une instruction de modification de paramètre de système a été activée ;
la modification du paramètre de système si la touche logicielle associée à ladite instruction de modification de paramètre de système a été activée.

5. Procédé selon l'une quelconque des revendication précédentes, caractérisé par:
la détermination du fait que la touche fixe a été activée ;
l'entrée du paramètre de système affiché dans le système si la touche fixe a été activée.

6. Procédé selon l'une quelconque des revendications précédentes, caractérisé en ce que l'interface d'opérateur présente des première et seconde touches fixes, la première touche fixe savant la première fonction d'incrémentation du niveau d'un écran d'affichage à afficher et la seconde fonction d'entrée de paramètres de système, la seconde touche fixe servant la première fonction de décrémentation du niveau d'un écran d'affichage à afficher et la seconde fonction d'annulation de modifications de paramètres de système, comprenant les étapes supplémentaires de:
détermination du fait que la première ou seconde touche fixa a été activée ;
exécution de la première fonction associée à la touche fixe activée si ledit niveau inférieur n'a pas été atteint; et
sinon, exécution de la seconde fonction associée à la touche fixe activée.

7. Procédé selon l'une quelconque des revendications précédentes, caractérisé par l'affichage d'une icône, qui identifie le système pour lequel l'information est affichée, sur le moyen d'affichage.

8. Procédé selon l'une quelconque des revendications précédentes, caractérisé par:
l'affichage d'un symbole indiquant qu'une modification du moyen d'affichage afin de présenter des écrans d'affichage à un niveau suivant est possible dans le cas où un écran d'affichage courant n'est pas dudit niveau inférieur ; et
l'affichage d'un symbole indiquant qu'une modification du moyen d'affichage afin d'afficher des écrans à un niveau précédent est possible si l'écran d'affichage courant n'est pas du niveau supérieur.

9. Dispositif d'affichage d'informations et de modification de paramètres associés à un système, comprenant un bus de communication (635), une unité de commande (600) connectée au bus de communication afin de commander des opérations du dispositif, un moyeu d'affichage (10, 11) connecté audit bus de communication afin d'afficher des écrans d'affichage qui contiennent des informations associées au système, une mémoire connectée audit bus d'information, ladite mémoire mémorisant des instructions destinées à ladite unité de commande et des informations de format et de données pour un menu d'écrans d'affichage à afficher sur le moyen d'affichage, le menu comprenant plusieurs niveaux d'écrans d'affichage, lesdits écrans d'affichage fournissant des informations concernant le système, le dispositif étant caractérisé par:
des moyens d'entrée de données (12, 13, 14) connectés au bus, lesdits moyens d'entrée de données comprenant une touche fixe (13, 14) et une touche logicielle (12), une touche logicielle étant une touche pouvant être reconfigurée par logiciel avec l'identification de ce qui se produit si la. touche est activée, l'activation de ladite touche fixe conduisant ledit moyen d'affichage à présenter un écran d'affichage d'un niveau suivant, l'activation de ladite touche logicielle conduisant ledit moyen d'affichage à présenter un écran d'affichage suivant à partir d'un niveau courant;
une interface de communication (635) destinée à assurer la connexion dudit bus de communication audit système.

10. Dispositif selon la revendication 9, caractérisé en ce que ladite mémoire mémorise un niveau inférieur (7012A à 7012I) et un niveau supérieur (7010) et ledit dispositif comprenant, en outre, un moyen de suivi destiné à suivre un niveau de pénétration courant à l'intérieur du menu et un moyen de comparaison destiné à comparer ladite limite de pénétration de niveau auxdits niveaux supérieur et inférieur, comme cela est requis.

11. Dispositif selon la revendication 10, caractérisé en ce que ledit moyen d'affichage affiche une instruction de modification de paramètre de système en association avec une touche logicielle lorsque ladite valeur de niveau de pénétration courante présente une relation prédéterminée avec ladite valeur de limite de pénétration de rangée.

12. Dispositif selon la revendication 11, caractérisé en ce que ladite unité de commande modifie le paramètre de système qui est affiché si la touche logicielle associée à ladite instruction de modification de paramètre de système a été activée.

13. Dispositif selon la revendication 12, caractérisé en ce que ladite unité de commande entre le paramètre de système affiché dans le système si la touche fixe a été activée.

14. Dispositif selon l^{'}une quelconque des revendications 9 à 13, caractérisé en ce que le moyen d'entrée de données comprend des première et seconde touches fixes, la première touche fixe servant la première fonction d'incrémentation du niveau d'un écran d'affichage à afficher et la seconde fonction d'entrée de paramètres de système, la seconde touche fixe servant la première fonction de décrémentation du niveau d'un écran d'affichage à afficher et la seconde fonction d'annulation des modifications aux paramètres de système.

15. Dispositif selon la revendication 14, caractérisé en ce que ladite unité de commande conduit lesdites première et seconde touches fixes à exécuter leur première fonction respective associée à la touche fixe activée si ladite limite de pénétration de niveau ne présente pas ladite relation prédéterminée par rapport audit niveau inférieur; et
sinon, ladite unité de commande conduit lesdites première et seconde touches fixes à exécuter leur seconde fonction respective associée à la touche fixe activée.

16. Dispositif selon l'une quelconque des revendications 9 à 15, caractérisé en ce que ladite mémoire mémorise une icône destinée à l'affichage sur ledit moyeu d'affichage, ladite icône étant symbolique du système.

17. Dispositif selon l'une quelconque des revendications 9 à 16, caractérisé en ce que:
ladite unité de commande donne l'instruction audit moyen d'affichage d'afficher un symbole indiquant qu'une modification du moyen d'affichage afin d'afficher des écrans à un niveau suivant à partir d'un affichage courant est possible si ledit niveau courant n'est pas le niveau inférieur ; et
ladite unité de commande donne l'instruction audit moyen d'affichage d'afficher un symbole indiquant qu'une modification du moyen d'affichage afin de présenter des écrans d'affichage à un niveau précédant à partir d'un affichage présent est possible si ledit niveau de pénétration de rangée courant n'est pas le niveau supérieur.
